# EUROPÄISCHE PATENTANMELDUNG

(11) **EP 0 978 597 A2**
(43) Veröffentlichungstag der Anmeldung: **09.02.2000**
(21) Anmeldenummer: 99113365.3
(22) Anmeldetag: 10.07.1999
(51) Int. Cl.: E03D 11/14, F16B 7/04

(54) **Vorrichtung zur Befestigung eines Bauelements**

(30) Priorität: 07.08.1998 DE 19835789
(71) Anmelder: Friatec Aktiengesellschaft, 68229 Mannheim (DE)
(72) Erfinder: Warkus, Clemens, 68723 Oftersheim (DE); Schweigert, Adolf, 88682 Salem (DE); Krzempek, Gregor, 68723 Oftersheim (DE)
(74) Vertreter: Schmitt, Meinrad, Dipl.-Ing.

(57) **Zusammenfassung**

Die Erfindung bezieht sich auf eine Vorrichtung zur Befestigung eines Bauelements (2, 4), das insbesondere als eine Befestigungsplatte für ein Sanitärelement oder als ein Spülkasten ausgebildet ist, an einer Profilschiene (41), Platte (72) oder dergleichen, wobei wenigstens ein Verbindungselement (34) vorgesehen ist. Es liegt die Aufgabe zugrunde, bei vereinfachter Handhabung die Montage zu erleichtern. Es wird vorgeschlagen, daß an wenigstens einer Seite des Bauelements (2, 4) zwei zueinander beabstandet angeordnete Halteelemente (28, 29) mit Krallen (30, 31) vorgesehen sind, welche über die Seitenfläche des Bauelements (2, 4) vorstehen, und daß wenigstens ein Halteelement (28) derart bewegbar angeordnet ist, daß dessen Kralle (30) in das Bauelement (2, 4) zumindest näherungsweise versenkbar ist. Die bewegbare Anordnung des Halteelements (28) ist derart vorgegeben, daß die Kralle (30) beim Einsetzen des Bauelements (2, 4) an der Außenfläche einer Profilschiene (41) oder dergleichen vorbeibewegbar ist und daß nach dem vollständigen Einsetzen die beiden Krallen (30, 31) in hinterschnittene Längsnuten (48) der genannten Profilschiene (41) eingreifen und/oder Kanten einer Platte (72) oder dergleichen umgreifen. Nachfolgend ist mittels des Verbindungselements (34) eine Arretierung zumindest des bewegbar angeordneten Halteelements (30) durchführbar.

## Beschreibung

Die Erfindung bezieht sich auf eine Vorrichtung zur Befestigung eines Bauelements, insbesondere einer Befestigungsplatte oder eines Spülkastens, gemäß den im Oberbegriff des Patentanspruchs 1 angegebenen Merkmalen.

Aus dem deutschen Gebrauchsmuster DE 296 02 714 U1 ist eine derartige Vorrichtung zur Befestigung eines Bauelements bekannt, welches als ein kastenförmiger Grundkörper zur Befestigung eines Urinals ausgebildet ist. Der Grundkörper besteht einteilig aus Kunststoff und enthält Öffnungen und Ausnehmungen für Gewindebolzen und zum Durchführen von Rohren oder Leitungen. Der Grundkörper wird mittels Winkeln und Schrauben an einer Raumwand oder an einer Rahmenkonstruktion eines Vorwand-Montagesystems befestigt. Die Herstellung der Verbindung erfordert einen nicht unerheblichen Montageaufwand, zumal die Schraubverbindungen Manipulationen im Bereich der Rückseite des Bauelements erfordern und dort die Platzverhältnisse recht eng und die Schrauben oder dergleichen schwer zugänglich sind.

Ferner ist aus der Offenlegungsschrift DE 44 06 208 A1 eine Anordnung mit einem Profilverbinder bekannt, mittels welchem zwei Profile verbindbar sind. Der Profilverbinder enthält ein Gehäuse mit zwei Halteklammern zum Festklammern des einen Profils. Der Profilverbinder ist zumindest teilweise in das Innere des zweiten Profils eingesetzt und mit diesem verspannt. Die Halteklammern sind abgewinkelt und weisen im Inneren des Gehäuses gekrümmte Außenflächen auf, welche aneinander liegen und aufeinander abgestützt sind. Die beiden Halteklammern sind mittels einer Schraube derart verbindbar und gegeneinander verspannbar, daß einerseits die in Längsnuten des ersten Profils eingreifenden Haltekrallen dort verspannt werden und andererseits die im Inneren des zweiten Profils liegenden Enden gegen die Innenflächen des zweiten Profils verspannt werden. Zur Herstellung der Verbindung muß zunächst der Profilverbinder stirnseitig in das genannte zweite Profil eingesetzt werden. Nachfolgend ist das zweite Profil zusammen mit dem Profilverbinder in Richtung auf das erste Profil, und zwar im wesentlichen orthogonal zu dessen Längsachse zu bewegen, wobei die genannte Schraube soweit gelöst sein muß, daß die Haltekrallen der Halteelemente in die zugeordneten Längsnuten des ersten Profils eingreifen können. Der Herstellungs- und Montageaufwand ist nicht unerheblich.

Hiervon ausgehend liegt der Erfindung die Aufgabe zugrunde, die Vorrichtung der genannten Art dahingehend weiterzubilden, daß bei einfacher Handhabung eine einfache Montage des Bauelements ermöglicht wird. Die Vorrichtung soll einen geringen Platz- und Materialbedarf erfordern und eine einfache Handhabung gewährleisten. Auch nachträgliche Positionsveränderungen, insbesondere in einem Vorwand-Montagesystem, sollen in einfacher Weise durchführbar sein.

Die Lösung dieser Aufgabe erfolgt gemäß den im Patentanspruch 1 angegebenen Merkmalen.

Die erfindungsgemäße Vorrichtung zeichnet sich durch eine funktionsgerechte Konstruktion aus und ermöglicht problemlos die Montage und Positionierung des Bauelements, insbesondere in einer Rahmenkonstruktion eines Vorwand-Montagesystems. Das Bauelement wird in besonders zweckmäßiger Weise von vorn in die Rahmenkonstruktion eingesetzt und Manipulationen an der Rückseite sind nicht erforderlich. Das Bauelement, welches insbesondere als eine Befestigungsplatte eines Sanitärelements oder einer Armatur oder als ein Spülkasten ausgebildet ist, enthält wenigstens eine seitliche Ausnehmung zur zumindest teilweisen Aufnahme wenigstens eines Halteelements. Das Halteelement ist in zweckmäßiger Weise derart nachgiebig angeordnet, daß es beim Einsetzen in die Rahmenkonstruktion ausweicht, um nachfolgend in einer Längsnut des Profils der Rahmenkonstruktion, einem korrespondierenden Rastelement oder einer Kante, eines Winkels einer Platte oder dergleichen einzurasten. Das Bauelement ist nunmehr bezüglich des Profils derart fixiert, daß nach Überwindung einer vorgebbaren Haltekraft das Bauelement bezüglich der Profilschiene stufenlos verschoben und positioniert werden kann. Nach Betätigung eines Verbindungselements, insbesondere dem Festziehen einer Schraube, wird die endgültige Fixierung bzw. kraft- und/oder formachlüssige Verbindung hergestellt.

Die Erfindung wird nachfolgend anhand der in der Zeichnung dargestellten Ausführungsbeispiele näher erläutert, ohne daß insoweit eine Beschränkung erfolgt. Es zeigen:
- Fig. 1: eine perspektivische Ansicht des als Befestigungsplatte ausgebildeten Bauelements,
- Fig. 2: eine perspektivische Darstellung des in einem Rahmen angeordneten Bauelements,
- Fig. 3 bis 6: vergrößerte Detaildarstellungen des Bauelements und einer Rahmenprofilschiene zur Erläuterung der Montage,
- Fig. 7: eine weitere Ausführungsform zur Befestigung des Bauelements.

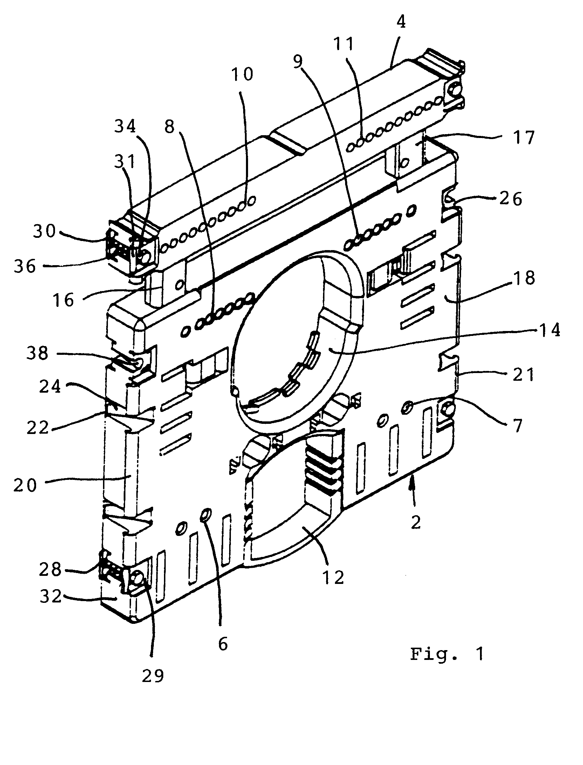

Fig. 1 zeigt das Bauelement, welches als eine Befestigungsplatte 2 mit einer Befestigungsleiste 4 ausgebildet ist. Mit der Befestigungsplatte 2 ist ein Sanitärelement, wie insbesondere eine WC-Schüssel, ein Bidet oder ein Waschtisch befestigbar. Hierzu enthält die Befestigungsplatte 2 bzw. die Befestigungsleiste 4 jeweils paarweise angeordnete Öffnungen 6 bis 11 für Verbindungsstangen oder Gewindebolzen. Zur Montage eines Bidets oder Waschtischs wird die Befestigungsplatte 2 in der dargestellten Position montiert, in welcher eine erste Ausnehmung 12 vertikal unterhalb einer zweiten größeren zentralen Ausnehmung 14 sich befindet. Zur Bidetbefestigung dienen die Öffnungen 8, 9, wobei in bevorzugter Weise nebeneinander eine Anzahl derartiger Öffnungen für unterschiedliche Lochabstände der Bidetbefestigungen vorgesehen sind; die Befestigungsleiste ist im Falle einer Bidetbefestigung nicht erforderlich. Zur Befestigung eines Waschtisches dienen die Öffnungen 10, 11 der Befestigungsleiste 4, die bezüglich der Befestigungsplatte 2 in der Höhe positionierbar ist. Hierzu weist die Befestigungsleiste 4 zwei in korrespondierende Öffnungen der Befestigungsplatte 2 eingreifende Stege 16, 17 auf. Wie ersichtlich, enthält auch die Befestigungsleiste 4 eine Anzahl der paarweise angeordneten Öffnungen 10, 11 für unterschiedliche Lochabstände der Waschtischbefestigungen. Zur Montage einer WC-Schüssel wird die Befestigungsplatte 2 um 180° gegenüber der dargestellten Position derart verdreht, daß die erste Ausnehmung 12 vertikal über der zweiten zentralen Ausnehmung 14 sich befindet.

Die Befestigungsplatte enthält an ihren beiden seitlichen Rändern, und zwar im Bereich der vorderen Frontfläche 18 jeweils seitliche Kopplungselemente 20, 21, welche zum Eingreifen in hinterschnittene Längsnuten der nachfolgend zu erläuternden Profilschiene eines Rahmens vorgesehen sind. Ferner enthält die Befestigungsplatte an beiden seitlichen Rändern, und zwar an der Rückseite weitere Kopplungselemente 22, welche elastisch federnd, insbesodnere an einem Arm 24 angeordnet sind. Die genannten Kopplungselemente 20, 21 und ebenso der Arm 24 sind einteilig mit der bevorzugt aus Kunststoff bestehenden Befestigungsplatte 2 ausgebildet. Die Kopplungselemente 20, 21 sind hakenartig derart ausgebildet, daß sie in die hinterschnittenen Längsnuten der genannten Profilschienen eingreifen und einrasten können.

Die Befestigungsplatte 2 und ebenso die Befestigungsleiste 4 enthält an den seitlichen Längskanten ferner Aussparungen 26 zur Aufnahme wenigstens eines Halteelements 28, 29. Das oder die Halteelemente 28, 29 sind in bevorzugter Weise plattenförmig ausgebildet und enthalten an ihren freien Enden Krallen 30, 31, welche zum Eingreifen in die genannten Längsnuten des Profils vorgesehen sind. Die Halteelemente 28, 29 mit den Haken 30, 31 stehen über die Seitenfläche 32 des Bauelements 2 in einem vorgegebenen Betrag vor, wie auch die oben genannten hakenförmigen Kopplungselemente 20, 21. Die beiden Halteelemente 28, 29 sind jeweils mittels einem Verbindungselement 34, insbesondere einer Schraube, miteinander verbunden. Zumindest das der Rückseite des Bauelements 2 bzw. der Befestigungsplatte 4 zugeordnete hintere Halteelement 28 ist derart angeordnet, daß die Krallen 30 in die Aussparung 26 derart versenkbar sind, daß jene zumindest näherungsweise bündig mit der Seitenfläche 32 liegen. Ferner ist eine Feder 36 vorgesehen, welche auf das hintere Halteelement 28 eine vom vorderen Halteelement 29 weggerichtete Kraft ausübt. Die Aussparung 26 enthält in zweckmäßiger Weise eine zur Rückseite der Befestigungsplatte 4 geneigt angeordnete Wand 38, um das Eindrücken bzw. Ausweichen der Schraube 34 mitsamt der Feder 36 zu ermöglichen.

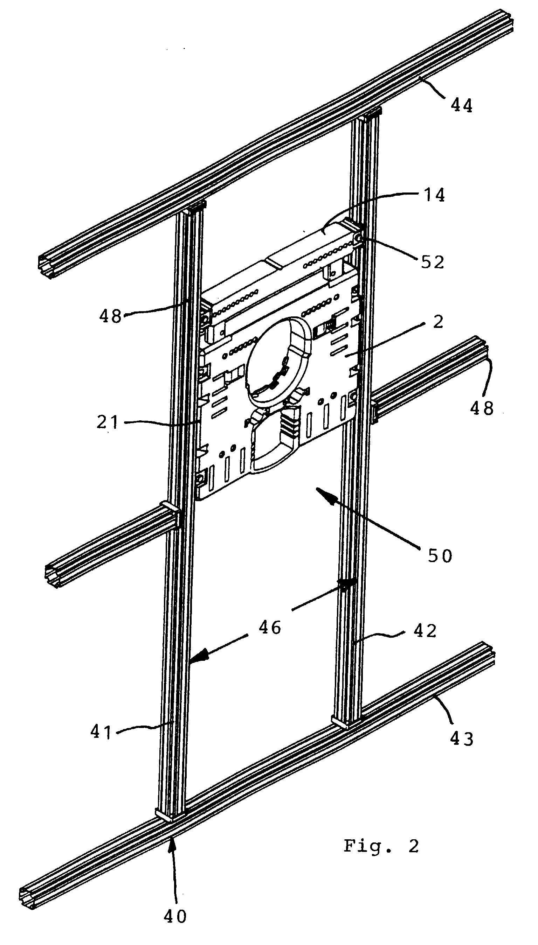

Fig. 2 zeigt ein erstes Montagesystem mit einem Rahmen 40, welcher zwei zueinander parallele, vertikale Profilschienen 41, 42, sowie horizontale Profilschienen 43, 44 enthält, die in geeigneter Weise miteinander verbunden sind. Die beiden vertikalen Profilschienen 41, 42 sind in einem Abstand 46 angeordnet, welcher im wesentlichen der Breite des Bauelements bzw. der Befestigungsplatte 2 und der Befestigungsleiste 4 entspricht. Die genannten Profilschienen 41 bis 44 sind als Hohlprofile mit im wesentlichen rechteckförmigem, zweckmäßig quadratischem Querschnitt ausgebildet und weisen an ihren vier Längskanten jeweils hinterschnittene Längsnuten 48 auf. In diese hinterschnittenen Längsnuten 48 greifen die oben erläuterten hakenförmigen Kopplungselemente sowie die Krallen der Halteelemente ein. Die Befestigungsplatte und die Befestigungsleiste werden in den mit einer Gebäudewand oder dergleichen in bekannter Weise verbundenen Rahmen 40 von vorn eingesetzt, wie es mit dem Pfeil 50 angedeutet ist. Beim Einsetzen der Befestigungsplatte 2 dienen die vorderen Kopplungselemente 21 und/oder Halteelemente 29 als Anschlag, so daß ein Hindurchschieben sicher verhindert wird. Nach dem Einsetzen rasten die hier nicht sichtbaren hinteren Kopplungselemente und/oder Halteelemente in die rückwärtigen Längsnuten der beiden vertikalen Profilschienen 41, 42 ein und hierdurch ist eine erste Positionierung der Befestigungsplatte 2 sowie der ggfs. mit dieser verbundenen Befestigungsleiste 4 gewährleistet. Die Kopplungselemente 20, 21 sind derart ausgebildet und auf die hintergriffigen Nuten der jeweiligen Profilschiene abgestimmt, daß ohne äußere Krafteinwirkung die eingenommene Position der Befestigungsplatte 2 samt Befestigungsleiste 4 eingehalten wird. Aus dieser Position kann die Befestigungsplatte 2 nach Überwinden einer vorgebbaren Haltekraft stufenlos in der Höhe verschoben und exakt in eine neue Position gebracht werden. Dies ist vor allem dann von entscheidender Bedeutung, wenn in dem Rahmen 40 nebeneinander mehrere Befestigungsplatten 2 für verschiedene Sanitärelemente anzuordnen sind. Eine exakte Ausrichtung der Befestigungsplatten und folglich der Sanitärelemente kann mit geringem Montageaufwand ohne besondere weitere Hilfsmittel durchgeführt werden.

Ist die Befestigungsplatte 2 in die zweite Endposition justiert, so wird mittels den Halteelementen und Festziehen des Verbindungselements bzw. der Schraube 34 die endgültige und feste Fixierung und Verbindung mit dem Rahmen 40 hergestellt. Hierzu ist von vorn lediglich die Schraube 34 festzuziehen. Umständliche Manipulationen an der Rückseite hinter dem Rahmen entfallen. Auch nach einer solchen endgültigen Fixierung ist es ohne weiteres möglich, die genannten Verbindungselemente bzw. Schrauben 34 wieder zu lösen, um ggfs. eine geänderte Höhenposition stufenlose vorzugeben.

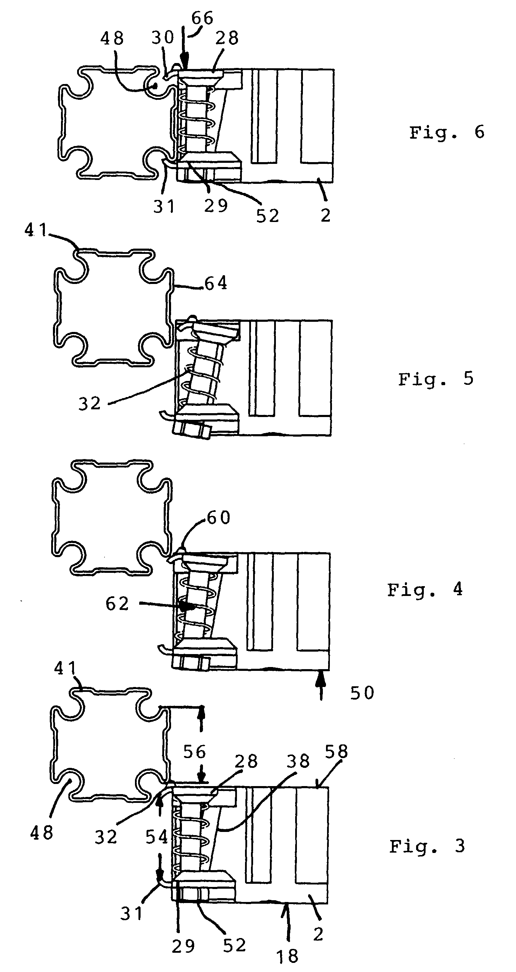

Anhand der Fig. 3 bis 6 soll das Einsetzen der hier teilweise und vergrößert dargestellten Befestigungsplatte 2 in den Rahmen erläutert werden, von welchem die eine vertikale Profilschiene 41 im Querschnitt dargestellt ist. die Profilschiene 41 enthält in ihren vier Eckbereichen jeweils die bereits erwähnte hinterschnittene Längsnut 48. Die Krallen 30, 31 des hinteren und des vorderen Halteelements 28, 29 sind gegeneinander gerichtet und auf die innere Formgebung der hinterschnittenen Längsnuten 48 abgestimmt. Der Schraubenkopf 52 ist versenkt zur Frontfläche 18 der Befestigungsplatte 2 derart angeordnet, daß er nicht über letztere vorsteht. Der Schraubenkopf 52 liegt am vorderen Halteelement 29 an, durchdringt dieses und greift in ein Innengewinde des hinteren Halteelements 28. Diese Schraubverbindung ist werkseitig derart vorgegeben, daß der Abstand 54 zwischen den freien Enden der gegeneinander gerichteten Krallen 30, 31 zumindest gleich groß ist wie der Kantenabstand 56 zwischen der vorderen und der hinteren Längsnut 48 des Profils 41. Die geneigte Innenwand 38 der zur Rückseite 58 sich öffnenden Aussparung 26 ist gut zu erkennen und ermöglicht das oben erwähnte Ausweichen zumindest des hinteren Halteelements 28 derart, daß das freie Ende der hinteren Kralle 30 zumindest näherungsweise bündig mit der Seitenfläche 32 der Befestigungsplatte 2 liegen kann.

Fig. 3 zeigt die Anfangsposition der Befestigungsplatte 2 bezüglich des Profils 41 beim Einsetzen in den Rahmen. Das hintere Halteelement 28 enthält eine Nase 60 derart, daß bei Anlage an die vordere Kante der Längsnut 41 ein Ausweichen des hinteren Halteelements 28 in die Befestigungsplatte 2 eingeleitet wird. Fig. 4 zeigt die in Richtung des Pfeiles 50 bereits etwas tiefer eingeschobene Befestigungsplatte 2, wobei nunmehr daas hintere Halteelement 28 samt der Schraube 34 in Richtung des Pfeiles 62 in das Innere, also gemäß Zeichnung nach rechts, geschwenkt bzw. eingeschoben ist. Gemäß Fig. 5 ist die Befestigungsplatte 2 noch weiter in den Rahmen eingesetzt und aufgrund der nachgiebigen Anordnung des hinteren Halteelements 28 kann dessen Kralle 30 an der Außenfläche 64 des Profils 41 vorbeibewegt werden.

Gemäß Fig. 6 ist die Befestigungsplatte 2 vollständig eingesetzt und aufgrund der Feder 36 ist das hintere Halteelement 28 wieder in die Ausgangsposition aus der Befestigungsplatte 2 herausgeschwenkt, wobei nunmehr die Kralle 30 in die hintere Längsnut 48 des Profils 41 gerichtet ist. Mittels des vorderen Halteelements 29 bzw. dessen Kralle 31 ist ein Anschlag gewährleistet, so daß die Befestigungsplatte 2 nicht weiter geschoben oder gar wieder aus dem Rahmen nach hinten herausgedrückt werden kann. Die Befestigungsplatte 2 ist nunmehr in der ersten Position im Rahmen zumindest vorläufig fixiert, und zwar mittels den erläuterten Kopplungselementen derart, daß ohne äußere Krafteinwirkung die eingenommene Position der Befestigungsplatte 2 im Rahmen beibehalten wird. Es sei ausdrücklich festgehalten, daß das Einsetzen des Bauelements 2 in den Rahmen von einer Person allein problemlos durchführbar ist, da keine sonstigen Manipulationen, Abstützungen, vorläufige Sicherung oder dergleichen erforderlich ist. Die Befestigungsplatte kann nunmehr im Rahmen manuell in der Höhe stufenlos positioniert und justiert werden. Danach wird von vorn einfach durch Festziehen der Schrauben 34 das hintere Halteelement 28 in Richtung des Pfeiles 66 festgezogen, so daß die Kralle 30 in die hintere Längsnut der Profilschiene 41 kraft- und/oder formschlüssig eingreift. Nach dem Festziehen der Schraube 34 ist die befestigungsplatte 2 über die beiden Halteelemente 28, 29 in besonders zweckmäßiger Weise mit vorgebbarer Vorspannkraft bezüglich der Profilschiene 41 dauerhaft gesichert.

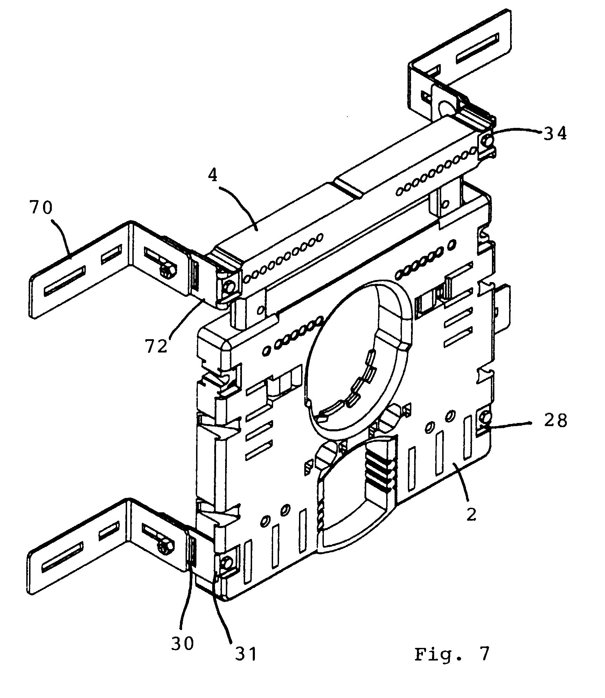

Fig. 7 zeigt eine weitere Ausgestaltung der Erfindung, gemäß welcher die Befestigungsplatte 2 und die Befestigungsleiste 4 anstelle in einem Rahmen aus Profilschienen in einem anderen Montagesystem mittels Winkeln 70 an einer Gebäudewand oder dergleichen befestigt sind. Das vordere Halteelement 29 liegt mit der Kralle 31 an der vorderen Längskante einer Platte 72 an, welche eine Öffnung 74 aufweist. In diese Öffnung 74 greift das hintere Halteelement mit seiner Kralle 30 ein. Der Winkel 70 ist mit der Platte 72 insbesondere mit einer Schraubverbindung gekoppelt, welche die Einstellung der Einbautiefe der Befestigungsplatte 2 ermöglicht. Grundsätzlich kann die Platte 72 auch einteilig mit dem Winkel 70 ausgebildet sein bzw. einen Schenkel desselben darstellen. Zur Montage werden zunächst die Winkel an der Gebäudewand oder dergleichen befestigt. Nachfolgend wird von vorn die Befestigungsplatte 2 samt der Befestigungsleiste 4 entsprechend den obigen Erläuterungen eingesetzt und abschließend wird die Befestigung durch Festziehen der Schraube 34 von vorn abgeschlossen. Umständliche Manipulationen im Bereich der Rückseite der Befestigungsplatte 2 sind auch bei dieser Ausgestaltung des Montagesystems nicht erforderlich.

### Bezugszeichen

- 2: Bauelement / Befestigungsplatte
- 4: Befestigungsleiste
- 6 - 11: Öffnung
- 12: erste Ausnehmung
- 14: zentrale Ausnehmung
- 16, 17: Steg von 4
- 18: Frontfläche
- 20 - 22: Kopplungslement
- 24: Arm
- 26: Aussparung
- 28, 29: Halteelement
- 30, 31: Kralle
- 32: Seitenfläche von 2
- 34: Schraube / Verbindungselement
- 36: Feder
- 38: geneigte Wand von 26
- 40: Rahmen / erstes Montagesystem
- 41, 42: vertikale Profilschiene
- 43, 44: horizontale Profilschiene
- 46: Abstand zwischen 41, 42 / Breite von 2
- 48: Längsnut
- 50: Pfeil
- 52: Schraubenkopf
- 54: Abstand von 30, 31
- 56: Kantenabstand von 48
- 58: Rückseite von 2
- 60: Nase
- 62: Pfeil
- 64: Außenfläche von 2
- 66: Pfeil
- 70: Winkel / zweites Montagesystem
- 72: Platte
- 74: Öffnung in 72

## Patentansprüche

1. Vorrichtung zur Befestigung eines Bauelements (2, 4), insbesondere einer Befestigungsplatte für ein Sanitärelement oder für eine Armatur oder eines Spülkastens, an einer Profilschiene (41), Platte (72) oder dergleichen, wobei wenigstens ein Verbindungselement (34) vorgesehen ist,
dadurch gekennzeichnet,
daß an wenigstens einer Seite des Bauelements (2, 4) zwei zueinander beabstandet angeordnete Halteelemente (28, 29) mit Krallen (30, 31) vorgesehen sind, welche über die Seitenfläche (32) des Bauelements (2, 4) vorstehen,
und daß wenigstens das eine Halteelement (28) derart bewegbar angeordnet ist, daß dessen Kralle (30) in das Bauelement (2, 4) zumindest näherungsweise versenkbar ist und an einer Außenfläche der Profilschiene (41), Platte (72) oder dergleichen vorbeibewegbar ist, wobei nach dem vollständigen Vorbeibewegen der Kralle (30) des ersten Halteelements (28) die beiden Krallen (30, 31) in hinterschnittene Längsnuten (48) der Profilschiene (41) eingreifen und/oder Kanten der Platte (72) oder dergleichen umgreifen,
und daß nachfolgend mittels des Verbindungselements (34) eine Arretierung zumindest des bewegbar angeordneten Halteelements (30) durchführbar ist.

2. Vorrichtung nach Anspruch 1, dadurch gekennzeichnet, daß das Verbindungselement (34) im Bereich der Frontfläche (18) des Bauelements (2, 4) angeordnet ist und dort zum Festspannen betätigbar ist.

3. Vorrichtung nach Anspruch 1 oder 2, dadurch gekennzeichnet, daß das Bauelement (2, 4) von vorn in ein Montagesystem, welches insbesondere einen Rahmen (40) mit wenigstens einer Profilschiene (41) aufweist, oder zwischen Winkel (70) und/oder Platten (72) montierbar ist.

4. Vorrichtung, insbesondere nach einem der Ansprüche 1 bis 3, dadurch gekennzeichnet, daß zumindest das bewegbare, bevorzugt hintere Halteelement (28) und das Verbindungselement (34) in einer Aussparung (26) des Bauelements (2, 4) angeordnet sind und daß die Aussparung (26) derart ausgebildet ist, daß ein Ausweichen und/oder Versenken des hinteren Halteelements (28), zweckmäßig gemeinsam mit dem Verbindungselement (34) ermöglicht ist.

5. Vorrichtung nach einem der Ansprüche 1 bis 4, dadurch gekennzeichnet, daß zumindest das hintere Halteelement (28) auf eine Feder (36) abgestützt ist und/oder daß das Verbindungselement (34) durch die Feder durchgreift.

6. Vorrichtung nach einem der Ansprüche 1 bis 5, dadurch gekennzeichnet, daß die beiden Halteelemente (28, 29) als Platten mit angeformten Krallen (30, 31) ausgebildet sind und/oder daß die Halteelemente (28, 29) aus Metall bestehen.

7. Vorrichtung nach einem der Ansprüche 1 bis 6, dadurch gekennzeichnet, daß das Verbindungselement (34) im Bereich der Frontfläche (18) einen Kopf (52) aufweist, dessen Oberfläche zumindest bündig, vorzugsweise um einen vorgebbaren Betrag versenkt zur Frontfläche (18) des Bauelements (2, 4) angeordnet ist.

8. Vorrichtung nach einem der Ansprüche 1 bis 7, dadurch gekennzeichnet, daß der Kopf (52) des Verbindungselements (34) vorn auf dem vorderen Halteelement (29) aufliegt, daß das Verbindungselement (34) das vordere Halteelement (26) durchdringt und mit seinem freien Ende mit dem hinteren Halteelement (28) gekoppelt ist und insbesondere in ein Innengewinde des hinteren Halteelements (28) eingreift.

9. Vorrichtung nach einem der Ansprüche 1 bis 8, dadurch gekennzeichnet, daß die freien Enden der Krallen (30, 31) der Halteelemente (28, 29) einen Abstand (54) zueinander aufweisen, welcher vor der Montage des Bauelements (2, 4) größer ist als der Kantenabstand (56) der Längsnuten (48) des Profils (58) oder von entsprechenden Kanten des Montagesystems.
